# EUROPÄISCHE PATENTSCHRIFT

(11) **EP 0 614 258 B1**
(45) Veröffentlichungstag und Bekanntmachung des Hinweises auf die Patenterteilung: **16.04.1997**
(21) Anmeldenummer: 94101296.5
(22) Anmeldetag: 28.01.1994
(51) Int. Cl.: H02G 3/04, B29C 49/00

(54) **Verfahren zur Herstellung eines aus Kunststoff bestehenden Kabelführungskanals**
Method for producing a plastic cable guiding channel
Procédé pour la fabrication d'une canalisation de cable en matière plastique

(30) Priorität: 04.03.1993 DE 4306813
(43) Veröffentlichungstag der Anmeldung: 07.09.1994
(73) Patentinhaber: TRW United-Carr GmbH & Co. KG, D-67677 Enkenbach-Alsenborn (DE)
(72) Erfinder: Rückwardt, Hans-Werner, D-67307 Göllheim/Pfalz (DE)
(74) Vertreter: Schieschke, Klaus, Dipl.-Ing.

(56) Entgegenhaltungen:
- EP-A- 0 349 376
- US-A- 3 151 905
- IBM TECHNICAL DISCLOSURE BULLETIN Bd. 12, Nr. 12, Mai 1970 Seite 2293 L.A. MITCHELL 'CABLE ENCOSURE'

## Beschreibung

Die Erfindung bezieht sich auf ein Verfahren zur Herstellung eines aus Kunststoff bestehenden Kabelführungskanals zur Aufnahme von Leitungen nach dem Oberbegriff des Anspruchs 1.

Als Stand der Technik ist bereits ein derartiger Kabelführungskanal zum Verlegen von elektrischen Leitungen bekannt (DE-AS 14 40 231). Dieser Kanal besteht aus einem Bodenteil mit seitlich angeordneten klammerartigen, durch Schlitze getrennten Winkelstücken und einer auf diese aufschiebbaren Abdeckungen. Um einzelne Kabelelemente ein- bzw. ausführen zu können, sind Brechlinien vorgesehen, um das saubere Ausbrechen einzelner Winkelstücke zu gewährleisten. Dieser Kabelführungskanal wird im Strangpreßverfahren hergestellt.

Zum Stand der Technik zählt weiterhin ein strangförmiges Verbindungselement für Kabel (DE-PS 30 31 833 C2). Dieses Verbindungselement besteht aus einem vernetzbaren und durch Wärmeeinwirkung schrumpfbaren Werkstoff.

Darüber hinaus ist ein Verdrahtungskanal bekannt mit sich in axialer Richtung erstreckender Einlegeöffnung und mehreren, seitlich angeordneten Schlitzen zur Aufnahme von elektrischen Leitungen (DE-GM 67 52 493). Eine weitere Kabelführung in Form eines Profils weist zwei elastisch verformbare Schenkel auf, zwischen welchen Kabel angeordnet werden können (EP-0 349 376 B1).

Alle vorgenannten Kabelführungskanäle sind im Strangpreßverfahren hergestellt.

Der Gegenstand, von dem die Erfindung ausgeht, betrifft einen Kabelführungskanal mit durchgehendem Längsschlitz welcher nach dem Einlegen von Kabeln über Verbindungselemente geschlossen wird (US-A-3 151 905).

Demgegenüber liegt der vorliegenden Erfindung die Aufgabe zugrunde, die Herstellung von Kabelführungskanälen zu vereinfachen und vielfältigere Gestaltungen zu ermöglichen.

Diese Aufgabe wird erfindungsgemäß dadurch gelöst, daß der Kabelführungskanal, durch Anwendung der Blasformtechnik in geschlossener Form geformt und der durchgehende Schlitz durch längsseitiges Auftrennen gebildet wird. Hierdurch ergibt sich der Vorteil einer neuen Anwendung der an sich bekannten Blasformtechnik, welche bis zum jetzigen Zeitpunkt lediglich zur Herstellung von Hohlteilen, wie Plastikflaschen, Kraftfahrzeuq-Luftführunqsschächten usw. verwendet wird. Diese Technik findet eine neue Anwendung im Bereich der Befestigung für elektrische Leitungssysteme im Fahrzeugbau.

In weiterer Ausgestaltung der Erfindung besteht auch die Möglichkeit, daß das Herstellen des Schlitzes in den Vorgang der Herstellung des Kabelführungskanals integriert ist.

In weiterer Ausgestaltung der Erfindung können an dem Kabelführungskanal im Längsabstand voneinander angeordnete Befestigungsflansche angeformt sein. Die Erfindung bezieht sich auch auf ein Kabelführungskanal gemäß dem Anspruch 4. Weiterhin kann dieser Kabelführungskanal mindestens einen hinterschnittenen Bereich aufweisen.

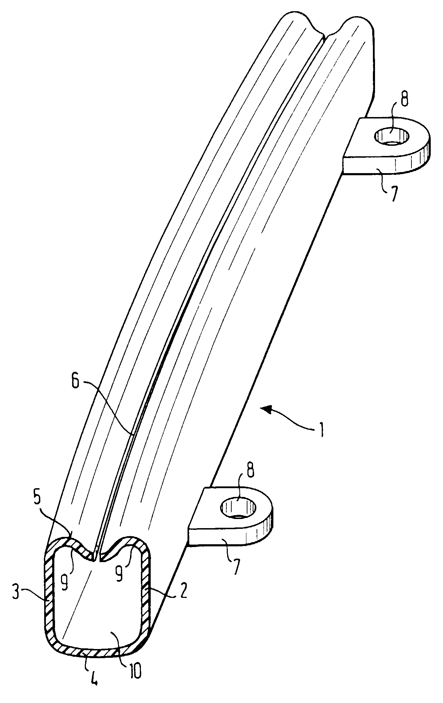

Die Erfindung wird nachfolgend anhand eines in der einzigen Zeichnung dargestellten Ausführungsbeispiels näher beschrieben. Die Zeichnung zeigt eine perspektivische Ansicht eines Kabelführungskanals, geschnitten.

Aus der Zeichnung ist zu erkennen, daß der Kabelführungskanal 1 aus zwei Seitenwänden 2 und 3, einem Boden 4 sowie einem oberen Bereich 5 besteht. Dieser Kabelführungskanal wird aus Kunststoff in Blasformtechnik geformt, wobei ein Längsschlitz 6 eingebracht wird. Dieser Längsschlitz 6 dient zur Einbringung bzw. zur Demontage von nicht näher dargestellten Leitungen in den Innenraum 10 des Kabelführungskanals.

Das Auftrennen, d.h. das Schaffen des Schlitzes 6 im oberen Bereich 5, kann entweder in den Blasformprozess integriert oder als anschließender, getrennter Arbeitsgang vorgenommen werden. Statt der Anordnung des Längsschlitzes 6 auf der Oberseite 5 des Kabelführungskanals 1 besteht auch die Möglichkeit, diesen Längsschlitz 6 in der Seitenwand 2 oder der Seitenwand 3 anzubringen.

Der Kabelführungskanal 1 kann weiterhin im Längsabstand voneinander angeordnete Befestigungsflansche 7 aufweisen, welche beispielsweise an die Seitenwand 2 angeformt sind und mit durchgehenden Öffnungen 8 ausgestattet werden. Hierdurch läßt sich der Kabelführungskanal 1 an einen Träger, beispielsweise an eine Kraftfahrzeugkarosserie befestigen.

Durch die Blasformtechnik können auch teilespezifische Hinterschnitte, beispielsweise in den Bereichen 9, gefertigt werden, welche in der Spritzgußtechnik überhaupt nicht oder nur mit sehr hohem Werkzeugaufwand hergestellt werden können. Damit ergibt sich durch die neuartige Anwendung eines an sich bekannten Verfahrens, nämlich der Blasformtechnik, eine vereinfachte Herstellung eines Kabelführungskanals 1, welcher die verschiedensten Konfigurationen aufweisen kann.

## Patentansprüche

1. Verfahren zur Herstellung eines aus Kunststoff bestehenden Kabelführungskanals (1) zur Aufnahme von Leitungen, insbesondere von elektrischen Leitungen in einem Kraftfahrzeug mit einer sich in Längsrichtung erstreckenden Ein- bzw. Ausbringöffnung in Form eines durchgehenden Schlitzes (6)
**dadurch gekennzeichnet,**
daß der Kabelführungskanal durch Anwendung der Blasformtechnik in geschlossener Form geformt und der durchgehende Schlitz (6) durch längsseitiges Auftrennen gebildet wird.

2. Verfahren nach Anspruch 1,
dadurch gekennzeichnet,
daß das Herstellen des Schlitzes (6) in den Vorgang der Herstellung des Kabelführungskanals (1) integriert ist.

3. Verfahren nach einem der vorhergehenden Ansprüche,
dadurch gekennzeichnet,
daß an dem Kabelführungskanal (1) im Längsabstand voneinander angeordnete Befestigungsflansche (7) angeformt sind.

4. Nach dem Verfahren nach Anspruch 1 hergestellter Kabelführungskanal,
dadurch gekennzeichnet,
daß dieser durch Blasformtechnik hergestellte und mit einem Schlitz (6) versehene Kanal (1) mindestens auf einer Seite Befestigungsflansche (7) aufweist.

5. Kabelführungskanal nach Anspruch 4,
dadurch gekennzeichnet,
daß dieser mindestens einen hinterschnittenen Bereich (9) aufweist.

## Claims

1. Method for producing a plastic cable guiding channel (1) for receiving lines, in particular electrical lines in a motor vehicle, having a longitudinally extending leading-in and leading-out opening in the form of a continuous slit (6), characterized in that the cable guiding channel is moulded in a closed mould by using the blow-moulding technique and the continuous slit (6) is formed by cutting open along the side.

2. Method according to Claim 1, characterized in that the producing of the slit (6) is integrated into the operation of producing the cable guiding channel (1).

3. Method according to one of the preceding claims, characterized in that fastening flanges (7) are moulded onto the cable guiding channel (1), arranged at longitudinal intervals from one another.

4. Cable guiding channel produced by the method according to Claim 1, characterized in that this channel (1) produced by the blow-moulding technique and provided with a slit (6) has fastening flanges (7) at least on one side.

5. Cable guiding channel according to Claim 4, characterized in that the said channel has at least one undercut region (9).

## Revendications

1. Procédé de fabrication d'un canal passe-câbles (1) consistant en une matière plastique et destiné à recevoir des conducteurs, notamment des conducteurs électriques dans un véhicule automobile, présentant un orifice respectif d'insertion ou d'extraction s'étendant dans le sens longitudinal et revêtant la forme d'une fente ininterrompue (6),
caractérisé par le fait
que le canal passe-câbles est moulé sous une forme fermée en appliquant la technique de moulage par soufflage, et la fente ininterrompue (6) est formée par entaillage longitudinal.

2. Procédé selon la revendication 1,
caractérisé par le fait
que le façonnage de la fente (6) est intégré dans le processus de fabrication du canal passe-câbles (1).

3. Procédé selon l'une des revendications précédentes,
caractérisé par le fait
que des brides de fixation (7) sont moulées solidairement sur le canal passe-câbles (1), avec espacement mutuel dans le sens longitudinal.

4. Canal passe-câbles fabriqué d'après le procédé selon la revendication 1,
caractérisé par le fait
que ce canal (1), muni d'une fente (6) et fabriqué par une technique de moulage par soufflage, présente des brides de fixation (7) sur au moins un côté.

5. Canal passe-câbles selon la revendication 4,
caractérisé par le fait
que ce dernier comporte au moins une zone contre-dépouillée (9).
